# EUROPEAN PATENT APPLICATION

(11) **EP 2 929 922 A2**
(43) Date of publication of application: **14.10.2015**
(21) Application number: 15153920.2
(22) Date of filing: 05.02.2015
(51) Int. Cl.: A63F 13/48, A63F 13/77, A63F 13/95, G06F 3/06

(54) **Game apparatus, speed control method and computer program**

(30) Priority: 20.02.2014 JP 2014030612
(71) Applicant: NINTENDO CO., LTD., Minami-ku, Kyoto 601 (JP)
(72) Inventor: Kondo, Masahiro, Kyoto, 601-8501 (JP); Nagaoka, Tomotsugu, Kyoto, 601-8501 (JP)
(74) Representative: Karl, Christof

(57) **Abstract**

A game apparatus 1 includes an internal HDD 13 storing a game program 26 obtained through communication, while not including an optical disk drive. In a first memory 11 of the game apparatus 1, a first basic program 24 is stored, which starts to be executed when the game apparatus 1 is started. In the internal HDD 13, a second basic program 25 is stored, which is executed after the first basic program 24 is executed. The speed control unit 21 of the game apparatus 1 can emulate the characteristics of the speed of reading and writing of data with respect to an external HDD 6 connected to an HDD connection unit 18, and read and write data from/to the internal HDD 13.

## Description

### FIELD

The present invention relates to a game apparatus performing processing related to a game, a speed control method and a computer program.

### BACKGROUND AND SUMMARY

Conventionally, various game apparatuses such as stationary or mobile game apparatuses have been used. For example, Japanese Patent Application Laid-Open No. 2008-73259 describes a game apparatus including a media drive for reading out a game program from a medium such as an optical disk or a magneto-optical disk and a hard disk drive storing game data related to the progress of a game. The game apparatus reads out a game program from a medium attached to a media drive and executes the program to progress a game application, and stores game data representing the progress of the game play in the hard disk drive.

In recent years, high-speed communication such as ADSL (Asymmetric Digital Subscriber Line) or optical communication has widely been spread. Such high-speed communication is utilized to allow a server apparatus or the like to distribute a game program to a game apparatus. When a game program is obtained through communication, a user can enjoy playing a game using a game apparatus without purchasing a recording medium such as an optical disk.

An object of the present invention is to provide a game apparatus, a speed control method and a computer program suitable for an environment in which a game program can be obtained through communication. Another object of the present invention is to provide a game apparatus, a speed control method and a computer program that can enhance the convenience for the user.

A game apparatus according to the present invention includes: an internal hard disk drive storing a program and/or data; a processor executing a program stored in the hard disk drive to perform game processing; a speed control unit controlling a speed of reading or writing of data with respect to the hard disk drive. The speed control unit switches a mode for reading and/or writing of data with respect to the hard disk drive to either one of two modes with different speeds, and at least one of the two modes is a mode for emulating a speed of reading and/or writing of data with respect to a storage device other than the hard disk drive.

The game apparatus according to the present invention includes a connection unit to which an external hard disk drive is detachably connected. The speed control unit emulates a speed of reading and/or writing of data with respect to the external hard disk drive in the mode for emulating.

Moreover, in the game apparatus according to the present invention, the processor is able to execute in parallel a plurality of programs including a program concerning a game and/or a program other than a program concerning a game, and the speed control unit switches the mode for reading and/or writing of data, for each program being executed by the processor.

Furthermore, the game apparatus according to the present invention includes an obtaining unit obtaining identification information of a program to be executed by the processor. The speed control unit controls a speed of reading and/or writing of data in accordance with the identification information obtained by the obtaining unit.

Furthermore, in the game apparatus according to the present invention, the speed control unit controls a speed of reading and/or writing of data in response to a command from a program being executed by the processor.

Furthermore, in the game apparatus according to the present invention, the processor is able to execute a program which operates by using a hard disk drive different from the internal hard disk drive, and the speed control unit emulates a speed of reading and/or writing of data with respect to the different hard disk drive in a case where the processor executes the program.

Furthermore, the game apparatus according to the present invention includes a communication unit transmitting/receiving a program and/or data via a network, and does not include an optical disk drive.

Furthermore, the game apparatus according to the present invention includes a first storage configured of a non-volatile memory. The first storage stores a first program starting to be executed when the game apparatus is started, and the hard disk drive stores the second program starting to be executed after the first program starts to be executed.

Furthermore, the game apparatus according to the present invention includes a second storage configured of a non-volatile memory. The second storage stores the second program.

Furthermore, the game apparatus according to the present invention includes: a corruption determination unit determining presence/absence of corruption in the second program stored in the hard disk drive; and a program restoration unit causing the hard disk drive to store the second program stored in the second storage if the corruption determination unit determines that corruption is present.

Furthermore, in the game apparatus according to the present invention, a program and/or data concerning a game received by the communication unit is stored in the hard disk drive, and is not stored in the first storage.

Furthermore, the game apparatus according to the present invention includes a connection unit to which an external hard disk drive is detachably connected, and stores a program and/or data concerning a game received by the communication unit in the internal hard disk drive or the external hard disk drive connected to the connection unit.

Furthermore, the game apparatus according to the present invention is compatible with another game apparatus including an optical disk drive for reading out a program and/or data from an optical disk and a processor for executing the program read out from the optical disk to perform game processing. An interface for the hard disk drive is the same as an interface for the optical disk drive in the above-described another game apparatus.

Furthermore, the game apparatus according to the present invention includes: a wireless communication unit performing wireless communication with a wireless operation device having an operation unit and a battery and wirelessly transmitting/receiving information concerning an operation accepted by the operation unit; and a power supply unit to which the wireless operation device is detachably connected via a power supply line, and supplying power to the battery of the wireless operation device via the power supply line.

Furthermore, the game apparatus according to the present invention includes a wireless communication unit performing wireless communication with a wireless operation device wirelessly transmitting/receiving information concerning an operation accepted by an operation unit. The wireless communication unit performs wireless communication with a dedicated communication protocol.

Furthermore, the game apparatus according to the present invention includes a wireless communication unit performing wireless communication with a wireless operation device having an operation unit and a display unit, and wirelessly transmitting/receiving information concerning an operation accepted by the operation unit and information concerning an image to be displayed on the display unit.

Furthermore, a computer program according to the present invention executed by the processor of the stationary game apparatus described above includes a processing routine for the stationary game apparatus and one or more processing routines for the stationary game apparatuses having hardware configurations different from the stationary game apparatus, and causes the processor to operate as an identification information obtaining means for obtaining identification information of the game apparatus, and a selection means for selecting a processing routine in accordance with the identification information obtained by the identification information obtaining means.

Furthermore, a computer program according to the present invention causes a processor of a game apparatus including an internal hard disk drive storing a program and/or data to operate as a speed control means for switching a mode for reading and/or writing of data with respect to the hard disk drive to either one of two modes with different speeds in response to a command from a program being executed.

Furthermore, a speed control method according to the present invention controlling, in a game apparatus including an internal hard disk drive storing a program and/or data, a speed of reading or writing of data with respect to the hard disk drive obtains identification information of a program to be executed, and switches a mode for reading and/or writing of data with respect to the hard disk drive to either one of two modes with different speeds in accordance with the obtained identification information.

Furthermore, a stationary game apparatus according to the present invention includes an internal hard disk drive storing a program and/or data, a communication unit transmitting/receiving a program and/or data via a network, and a processor executing a program stored in the hard disk drive to perform game processing, and does not include an optical disk drive for reading out a program and/or data from an optical disk.

Furthermore, a game system according to the present invention includes an internal hard disk drive storing a program and/or data, a communication unit transmitting/receiving a program and/or data via a network, and a processor executing a program stored in the hard disk drive to perform game processing, and does not include an optical disk drive for reading out a program and/or data from an optical disk.

Furthermore, a game apparatus according to the present invention includes an internal hard disk drive and a storage configured of a non-volatile memory. The storage stores a first program starting to be executed when the game apparatus is started, and the hard disk drive stores the second program starting to be executed after the first program starts to be executed.

Furthermore, a game apparatus according to the present invention includes a wireless communication unit performing wireless communication with a wireless operation device having an operation unit, a display unit and a battery, and wirelessly transmitting/receiving information concerning an operation accepted by the operation unit and information concerning an image to be displayed on the display unit, and a power supply unit to which the wireless operation device is detachably connected via a power supply line and supplying power to the battery of the wireless operation device via the power supply line.

Furthermore, a computer program according to the present invention executing a plurality of types of game apparatuses having different hardware configurations includes multiple processing routines for the multiple types of game apparatuses, and causes the processor to operate as an identification information obtaining means for obtaining identification information of a game apparatus and a selection means for selecting a processing routine in accordance with identification information obtained by the identification information obtaining means.

The present invention is configured to be suitable for an environment in which a game program can be obtained through communication and has a configuration not including an optical disk drive, thereby realizing reduction in cost, size and the like of the game apparatus. Moreover, power is supplied from the game apparatus to the wireless operation device via a power supply line to charge the battery of the wireless operation device, thereby enhancing the convenience for the user related to the charging work.

### BRIEF DESCRIPTION OF THE DRAWINGS

Figure 1 shows an example non-limiting block diagram illustrating a configuration of a game apparatus according to a present example embodiment;
Figure 2 shows an example non-limiting block diagram illustrating a configuration of a controller included in a game apparatus according to the present example embodiment;
Figure 3 shows an example non-limiting schematic diagram for illustrating speed control for reading and writing data by a speed control unit;
Figure 4 shows an example non-limiting schematic view for illustrating speed control for reading and writing data by a speed control unit;
Figure 5 shows an example non-limiting flowchart illustrating a procedure of speed control processing performed by a game apparatus;
Figure 6 shows an example non-limiting flowchart illustrating a procedure of speed control processing performed by a game apparatus;
Figure 7 shows an example non-limiting flowchart illustrating a procedure of selection processing for a processing routine to be performed by a game apparatus; and
Figure 8 shows an example non-limiting flowchart showing a procedure of data restoration processing performed by a game apparatus.

### DETAILED DESCRIPTION OF NON-LIMITING EXAMPLE EMBODIMENTS

### <Hardware Configuration>

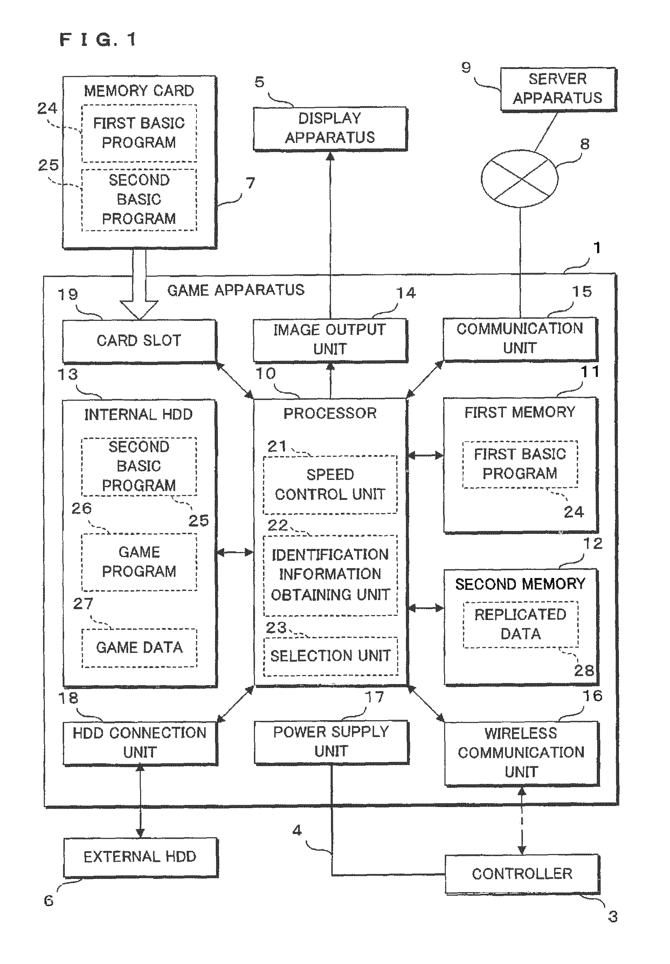

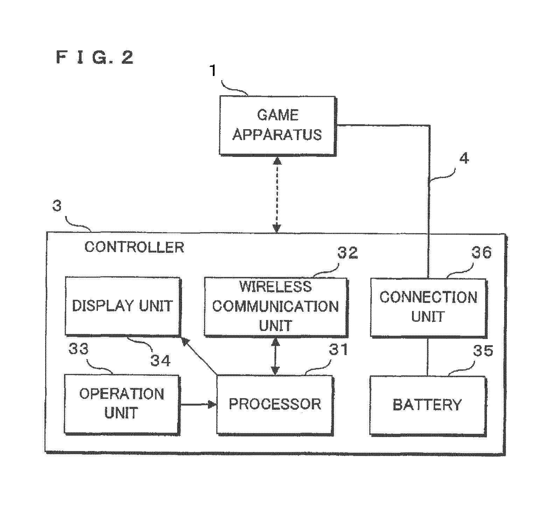

Figure 1 shows an example non-limiting block diagram illustrating a configuration of a game apparatus according to a present example embodiment. Figure 2 shows an example non-limiting block diagram illustrating a configuration of a controller included in the game apparatus according to the present example embodiment. A game apparatus 1 according to the present example embodiment is not provided with a display unit and displays a game screen on a display apparatus 5 such as a liquid-crystal television. The game apparatus 1 is a so-called stationary game apparatus. The game apparatus 1 includes a processor 10, a first memory 11, a second memory 12, an internal

HDD (Hard Disk Drive) 13, an image output unit 14, a communication unit 15, a wireless communication unit 16, a power supply unit 17, an HDD connection unit 18, a card slot 19, a controller 3 and the like. The controller 3 is provided exclusively for the game apparatus 1. The controller 3 includes a processor 31, a wireless communication unit 32, an operation unit 33, a display unit 34, a battery 35, a connection unit 36 and the like.

The processor (processor) 10 of the game apparatus 1 is configured using an arithmetic processing device such as a CPU (Central Processing Unit). The processor 10 reads out a first basic program 24 stored in the first memory 11 and a second basic program 25 stored in the internal HDD 13, and executes the programs. This allows the processor 10 to perform basic processing such as control processing for each component in the game apparatus 1, communication processing with the controller 3, the server apparatus 9 or the like, and processing related to an interface between the processor 10 and the user. By reading out and executing the game program 26 stored in the internal HDD 13, the processor 10 performs various kinds of information processing related to a game. For example, the processor 10 performs processing of accepting an operation related to a game, which is performed on the controller 3, processing of, for example, determining a game in accordance with the accepted operation, processing of generating a game image to be displayed on the display apparatus 5 in accordance with the accepted operation, an event in a game or the like.

The first memory 11 and the second memory 12 are configured using a non-volatile memory such as a flash memory, for example. The processor 10 is able to read or write data from/to the first memory 11 and the second memory 12. In the present example embodiment, the first basic program 24 is stored in the first memory 11. The first basic program 24 is, for example, a kernel portion of an operating system. When the game apparatus 1 is started, the processor 10 first reads out the first basic program 24 from the first memory 11 and starts processing. In the first memory 11, for example, setting information for the game apparatus 1, information related to a right for the downloaded game program 26 or the like, version information for a program, or identification information for the game apparatus 1 may be stored. In the first memory 11, it is preferable to store, for example, data with high security, or data which is difficult to be restored or reacquired if corrupted. In the present example embodiment, replicated data 28 is stored in the second memory 12. The replicated data 28 is a copy (backup) of a program, data or the like stored in the internal HDD 13.

The internal HDD 13 is a magnetic storage device with a large volume compared to the first memory 11 and the second memory 12. The internal HDD 13 transmits/receives data to/from the processor 10 through an interface with a standard of, for example, SATA (Serial Advanced Technology Attachment) or a USB (Universal Serial Bus). It is to be noted that the same interface as that used between the optical disk drive and the processor in the conventional game apparatus, for example, may be employed for the interface between the internal HDD 13 and the processor 10.

The game apparatus 1 according to the present example embodiment has a compatibility with another game apparatus on which an optical disk drive capable of reading out a game program from an optical disk is mounted. In other words, it is possible for the game apparatus 1 according to the present example embodiment to execute the same game program as another game apparatus on which an optical disk drive is mounted. The same interface as that of the optical disk drive mounted on another compatible game apparatus is employed for the interface of the internal HDD 13 in the game apparatus 1 according to the present example embodiment.

In the present example embodiment, the second basic program 25 is stored in the internal HDD 13. The second basic program 25 is a program having functions of, for example, GUI (Graphical User Interface) of the operating system. The second basic program 25 may include, for example, a launcher program for displaying a list of icons for the game program 26, a setting program for displaying a setting screen for the game apparatus 1 and accepting such setting, a program for displaying a menu screen or the like as an initial screen after the game apparatus 1 is started, or a browser program for viewing a homepage on the Internet. After starting the processing performed by the first basic program 24, the processor 10 reads out the second basic program 25 from the internal HDD 13 at an appropriate timing, e.g., after the processing of the first basic program 24 is completed or during the processing procedure, and executes the second basic program 25.

In the present example embodiment, the internal HDD 13 can store therein the game program 26 and the game data 27. In the present example embodiment, the game program 26 cannot be stored in the first memory 11 or the second memory 12. The game apparatus 1 downloads the game program 26 from the server apparatus 9 via the network 8 such as the Internet through the communication unit 15, and stores the game program 26 in the internal HDD 13. The game data 27 includes information representing the progress of the game (so-called saved data) as well as information such as an ability score of a character in the game, or a high score, ranking or the like in the game. Among the information that are changed by the user playing the game, the game data 27 includes information the change of which is to be stored. It is to be noted that the internal HDD 13 can store various data such as, for example, stationary data, video data, sound data, text data, additional data of a game, or data obtained through communication.

In the present example embodiment, the replicated data 28 to be stored in the second memory 12 is a duplicate of the second basic program 25 and game data 27 stored in the internal HDD 13. The replicated data 28 may however include data other than those as described above. The replicated data 28 preferably serves as a backup for data which cannot be reacquired or is difficult to be reacquired through communication with the server apparatus 9, among the programs and data stored in the internal HDD 13. In the case where the second basic program 25 or game data 27 in the internal HDD 13 is changed in the course of the processing, the processor 10 changes the corresponding replicated data 28 in a similar manner. When, for example, an error is detected for the second basic program 25 or game data 27 stored in the internal HDD 13, the processor 10 reads out the replicated data 28 from the second memory 12 and restores the second basic program or game data 27 stored in the internal HDD 13.

The image output unit 14 has a connection terminal to which a cable for exchanging image signals with the display apparatus 5 is connected. The image output unit 14 converts image data for display supplied from the processor 10 into an image signal suitable for display on the display apparatus 5 and outputs the converted image signal. The communication unit 15 performs communication with the server apparatus 9, another game apparatus 1 or the like via the network 8 such as the Internet. The communication unit 15 transmits the data for transmission which is supplied from the processor 10 to the server apparatus 9 or the like. The communication unit 15 supplies the data received from the server apparatus 9 or the like to the processor 10.

The wireless communication unit 16 transmits/receives data wirelessly to/from the controller 3. In the present example embodiment, the wireless communication unit 16 communicates with the controller 3 using a dedicated communication protocol, not a general-purpose communication protocol. The controller 3 accepts the operation of the user and transmits the operation information to the game apparatus 1 through wireless communication. The wireless communication unit 16 of the game apparatus 1 receives operation information from the controller 3, and supplies the information to the processor 10. This allows the processor 10 to perform game processing or the like in accordance with the operation performed on the controller 3. The controller 3 according to the present example embodiment includes a display unit 34. The processor 10 of the game apparatus 1 generates an image to be displayed on the display unit 34 of the controller 3, and sends the generated image data to the wireless communication unit 16. The wireless communication unit 16 wirelessly transmits the image data sent from the processor 10 to the controller 3. The controller 3 displays an image based on the received image data on the display unit 34.

In the present example embodiment, the controller 3 of the game apparatus 1 has a wireless communication function and wirelessly transmits/receives information to/from the game apparatus 1. It is thus unnecessary for the controller 3 to be connected to the game apparatus 1 with wire when the user plays a game. The controller 3 operates with the power stored in the built-in battery 35. The power supply unit 17 in the game apparatus 1 has a connection terminal for connecting the power supply cable 4 thereto. The controller 3 can be connected to the connection terminal via the power supply cable 4. When the controller 3 is connected via the power supply cable 4, power is supplied from the power supply unit 17 to the controller 3 to charge the battery. After the battery is fully charged, the user can remove the controller 3 from the game apparatus 1 to use it for playing a game. That is, the game apparatus 1 is configured to charge the battery by connecting the controller 3 to the game apparatus 1. This eliminates the need for the user to perform, for example, the work of connecting the controller 3 to an AC adapter for charging the battery and the work of connecting the AC adapter to an electrical outlet. It is thus possible to improve the convenience of the game apparatus 1.

The HDD connection unit 18 of the game apparatus 1 has a connection terminal to which a cable for transmitting/receiving data is connected. The HDD connection unit 18 is able to connect thereto one or more external HDDs 6 via a cable or cables. The game apparatus 1 can read or write data from/to the connected external HDD 6. The HDD connection unit 18 may be based on a standard such as USB (Universal Serial Bus), for example. The external HDD 6 connected to the HDD connection unit 18 is used similarly to the internal HDD 13 by the game apparatus 1, and stores therein the game program 26, game data 27 and the like. The game program 26, game data 27 and the like are selectively stored in the internal HDD 13 or the external HDD 6.

The card slot 19 of the game apparatus 1 may receive or discharge the memory card 7 such as an SD memory card. The card slot 19 can read or write data from/to the attached memory card 7. In the present example embodiment, the game apparatus 1 is able to read out the first basic program 24 or the second basic program stored in the memory card 7 through the card slot 19, and to store the read-out program in the first memory 11 or the internal HDD 13. This can realize, for example, version upgrade of the first basic program 24 and the second basic program 25. It is to be noted that the version upgrade of a program may be realized by downloading a program from the server apparatus 9 through the communication unit 15.

The processor 31 of the controller 3 performs, for example, processing of transmitting information related to an operation accepted by the operation unit 33 to the game apparatus 1, and processing of displaying an image on the display unit 34 based on the image data transmitted from the game apparatus 1. The wireless communication unit 32 wirelessly transmits/receives data to/from the game apparatus 1. The operation unit 33 is constituted by a push button, a cross key, an analog stick, a touch panel or the like. The operation unit 33 accepts the operation of the user. The operation unit 33 notifies the processor 31 of the accepted operation. The display unit 34 is constituted by a liquid-crystal panel or the like, and displays an image in accordance with the control of the processor 31. The battery 35 stores electric power. The battery 35 supplies the stored power to various parts of the controller 3 to operate the parts. The connection unit 36 has a connection terminal for connecting the power supply cable 4 thereto, and can thus be connected to the game apparatus 1 via the power supply cable 4. In the case where the controller 3 is connected to the game apparatus 1 via the power supply cable 4, power is supplied from the game apparatus 1 to the controller 3. Here, power is supplied from the connection unit 36 to the battery 35 to charge the battery 35.

As described above, the game apparatus 1 according to the present example embodiment can communicate with the server apparatus 9 via the network 8 such as the Internet through the communication unit 15. The game apparatus 1 is able to download the game program 26 distributed by the server apparatus 9 and to store it in the internal HDD 13. The game apparatus 1 reads out and executes, by the processor 10, the game program 26 stored in the internal HDD 13, to perform game processing. It is to be noted that the game apparatus 1 according to the present example embodiment is not provided with an optical disk drive to be loaded with an optical disk such as a CD (Compact Disc) or a DVD (Digital Versatile Disc) in which the game program 26 is stored. Without the optical disk drive, the game apparatus 1 can realize reduction in cost, size and the like compared to a game apparatus provided with an optical disk drive. It is to be noted that the game apparatus 1 may externally connect the external HDD 6 to the HDD connection unit 18 to utilize the external HDD 6 similarly to the internal HDD 13 in preparation for capacity shortage or the like of the internal HDD 13.

The game apparatus 1 according to the present example embodiment includes the controller 3 which can be utilized by the user in operation of a game without wired connection with the main body of the game apparatus 1 by having a wireless communication function. The controller 3 operates with the power stored in the battery 35. The game apparatus 1 is connected to the controller 3 via the power supply cable 4, and includes the power supply unit 17 for supplying power to the controller 3. By connecting the controller 3 to the game apparatus 1 via the power supply cable 4, the user is able to charge the battery 35 of the controller 3. This can improve the convenience related to charging of the controller 3.

The game apparatus 1 according to the present example embodiment stores the first basic program 24 in the first memory 11 and the second basic program 25 in the internal HDD 13. The first basic program 24 is a program executed first by the processor 10 when the game apparatus 1 is started. The second basic program 25 is a program executed by the processor 10 after the first basic program 24 starts to be executed. The second basic program 25 may be executed in parallel with the first basic program 24. The first memory 11 employs a non-volatile memory and has a shorter time period from the power input to the time when data can be read out, compared to the internal HDD 13. Thus, the game apparatus 1 first executes the first basic program 24 in the first memory 11 at the time of starting, and thereafter executes the second basic program 25 in the internal HDD 13, so that the time required for starting can be shortened.

The game apparatus 1 according to the present example embodiment stores, in the second memory 12, replicated data 38 obtained by replicating the second basic program 25, the game data 27 and the like stored in the internal HDD 13. The game apparatus 1 can read out necessary data from the replicated data 28 stored in the second memory 12 in the case where, for example, an error is detected in the data stored in the internal HDD 13. The game apparatus 1 is able to restore data by overwriting the data in the internal HDD 13 with the read-out data. This can enhance reliability of data to be stored in the game apparatus 1.

Moreover, the processor 10 of the game apparatus 1 according to the present example embodiment reads out and executes the first basic program 24 or the second basic program 25, so as to implement the speed control unit 21, identification information obtaining unit 22, selection unit 23 and the like as software-based functional blocks. The speed control unit 21 performs processing of controlling the speed of reading and writing of data with respect to the internal HDD 13. The identification information obtaining unit 22 performs processing of obtaining identification information attached to the game apparatus 1 from the first memory 11 or the like. The selection unit 23 selects a processing routine included in the first basic program 24 or the second basic program 25 based on the identification information obtained by the identification information obtaining unit 22. These software-based functions will be described below.

### <Speed Control Processing>

The game apparatus 1 according to the present example embodiment is able to switch the speed of reading and writing of data with respect to the internal HDD 13 between two stages of a high speed mode and a low speed mode. According to the present example embodiment, in the high speed mode, the game apparatus 1 reads or writes data at a speed with which the performances of the internal HDD 13, the processor 10 and the like are utilized to a maximum extent. On the other hand, in the low speed mode, the game apparatus 1 reads and writes data from/to the internal HDD 13 by emulating the reading and writing characteristics of the external HDD 6 which is slower than the internal HDD 13. The difference in speed between the internal HDD 13 and the external HDD 6 may occur due to, for example, the difference of interfaces related to data transmission/reception with respect to the processor 10.

Even the game program 26 is created on the assumption that the reading and writing speed is set for the external HDD 6, the game apparatus 1 according to the present example embodiment is able to store the game program 26 in the internal HDD 13, and to read out the game program 26 from the internal HDD 13 and execute it by the processor 10. In the case of reading out and executing the game program 26 created with the reading and writing speed for the external HDD 6, the game apparatus 1 switches modes as described above.

The speed control of the game apparatus 1 as described above is performed by the speed control unit 21 implemented by the processor 10 executing the first basic program 24 or the second basic program 25. It is to be noted that the speed control unit 21 may be implemented by either the first basic program 24 or the second basic program 25. In the present example embodiment, the speed control unit 21 may be implemented by executing the first basic program 24.

In the present example embodiment, when the processing of the first basic program 24 or the second basic program 25 is performed, the speed control unit 21 reads and writes data from/to the internal HDD 13 in the high-speed mode. The speed control unit 21 switches between the high-speed mode and the low-speed mode as described above when the game program 26 is executed.

The game program 26 designates which one of the high-speed mode and the low-speed mode is used to read or write data from/to the internal HDD 13 in the processing of the game program 26 itself. In the case where a command for designating the speed is issued from the game program 26 upon executing the game program 26 by the processor 10, the speed control unit 21 switches between the high-speed mode and the low-speed mode in response to the command.

The speed control unit 21 switches between the high-speed mode and the low-speed mode according to its own judgment, for the game program 26 not explicitly providing a command for designating the speed. For example, the server apparatus 9 distributes the game program 26 together with the information indicating which one of the high-speed mode and the low-speed mode is used to operate the game program 26. When downloading the game program 26 from the server apparatus 9, the game apparatus 1 obtains information related to the speed and stores, as a table, the association between the speed and the information for identifying the game program 26 in the internal HDD 13. The information for identifying the game program 26 may be, for example, a game title, a program version and the like. The speed control unit 21 obtains the identification information of the game program 26 to be executed, and determines which one of the high-speed mode and the low-speed mode is used to operate the game program 26 by referring to a table which has been stored.

The processor 10 of the game apparatus 1 according to the present example embodiment can execute multiple programs in parallel. This is so-called background processing, overlay processing or the like. The processor 10 may implement parallel processing by simultaneously executing multiple programs, or may implement pseudo parallel processing by processing multiple programs in a time-division manner. The multiple programs executed in parallel may include various programs such as a program for displaying a menu screen, a program for accepting change of setting for the game apparatus 1, a program for downloading the game program 26 and a program for browsing the Internet. For example, while performing game processing by executing a game program 26, the processor 10 may download another game program 26 in the background. For example, when an operation for displaying a system menu is performed while executing a game program 26 for game processing, the processor 10 may execute the game processing in the background and displays the system menu.

In the case where the processor 10 executes multiple programs in parallel, the speed control unit 21 selects, for each program, the high-speed mode or the low speed-mode for reading and writing of data with respect to the internal HDD 13. When, for example, two programs are executed in parallel, the speed control unit 21 can operate the first program in the high-speed mode and the second program in the low-speed mode. When a request for reading or writing of data with respect to the internal HDD 13 is made from the first program, the speed control unit 21 reads or writes data concerning the request in the high-speed mode. When a request for reading or writing of data with respect to the internal HDD 13 is made from the second program, the speed control unit 21 reads or writes data concerning the request in the low-speed mode.

It is also possible for the game apparatus 1 to store the association between identification information and speed, as a table, for programs other than the game program 26. The speed control unit 21 can select the high-speed mode or the low-speed mode with reference to the table. These programs may issue a command for explicitly designating the speed, and the speed control unit 21 can switch between the high-speed mode and the low-speed mode in response to the command. Accordingly, for example, while a game program 26 is being executed in the low-speed mode, it is possible to download another game program 26 in the background in the high-speed mode.

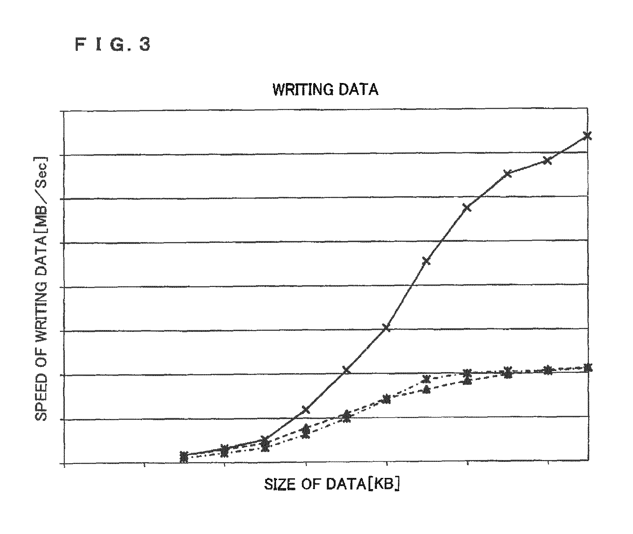

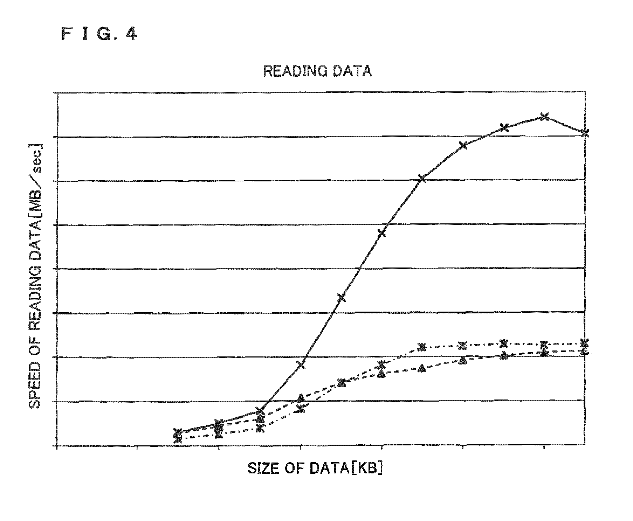

Figures 3 and 4 show example non-limiting schematic diagrams for illustrating speed control for reading and writing data by the speed control unit 21. The drawings show graphs each having a horizontal axis representing the size [KB] of data to be read or written and a vertical axis representing the speed [MB/sec] of reading or writing data. Figure 3 shows the characteristic of writing data, whereas Figure 4 shows the characteristic of reading data. In each of the drawings, the characteristic of reading or writing with respect to the internal HDD 13 in the high-speed mode is indicated by a solid line, the characteristic of reading or writing with respect to the external HDD 6 is indicated by a dashed-dotted line, and the characteristic of reading or writing with respect to the internal HDD 13 in the low-speed mode is indicated by a broken line.

As illustrated, comparing the speed of reading and writing of data in the high-speed mode for the internal HDD 13 with the speed of reading and writing of data for the external HDD 6, the speed for the external HDD 6 is slower. In the low-speed mode, the speed control unit 21 of the game apparatus 1 reduces the speed of reading and writing data for the internal HDD 13 so as to have substantially the same characteristic as the speed of reading and writing data for the external HDD 6.

For the reason as described above, the game apparatus 1 stores the association between the size of data to be read or written and the speed (or the time required for processing) in the low-speed mode. The speed control unit 21 starts clocking with a timer when a request for reading or writing data is made from the game program 26. The speed control unit 21 obtains the time required for processing when the data reading or writing with respect to the internal HDD 13 is completed. The speed control unit 21 obtains the speed corresponding to the size of the read or written data based on the stored association. The speed control unit 21 calculates the time to be consumed for reading or writing based on the obtained speed. The speed control unit 21 calculates the difference between the time to be consumed for processing and the time actually required for processing. The speed control unit 21 notifies the game program 26 that reading or writing of data is completed, after waiting for the time difference.

Thus, the game apparatus 1 is able to read or write data from/to the internal HDD 13 in the low-speed mode in which the speed characteristic of reading and writing of data with respect to the external HDD 6 is emulated. The game apparatus 1 is able to read and write data with similar speed characteristics when the game program 26 is stored in either the internal HDD 13 or the external HDD 6. This can alleviate the burden in development, debugging and the like of the game program 26.

In the case where, for example, a bug due to the speed of reading and writing data is found in a game program 26 which has been developed, it is possible to change a command related to speed setting of the game program 26 or a table used for determining the speed. Accordingly, the reading and writing speed in executing the game program 26 can be changed, which may solve a bug due to the speed.

In the case where, for example, a bug in the high-speed mode is found after the game program 26 which has been designed to operate both in the high-speed mode and the low-speed mode is sold, published or the like, the setting of the game program 26 may be so changed as to operate in the low-speed mode, which can easily solve the bug. When the external HDD 6 to be emulated in the low-speed mode has a wide range of warranty, it is highly possible for the game program 26 to operate by reading and writing in the low-speed mode.

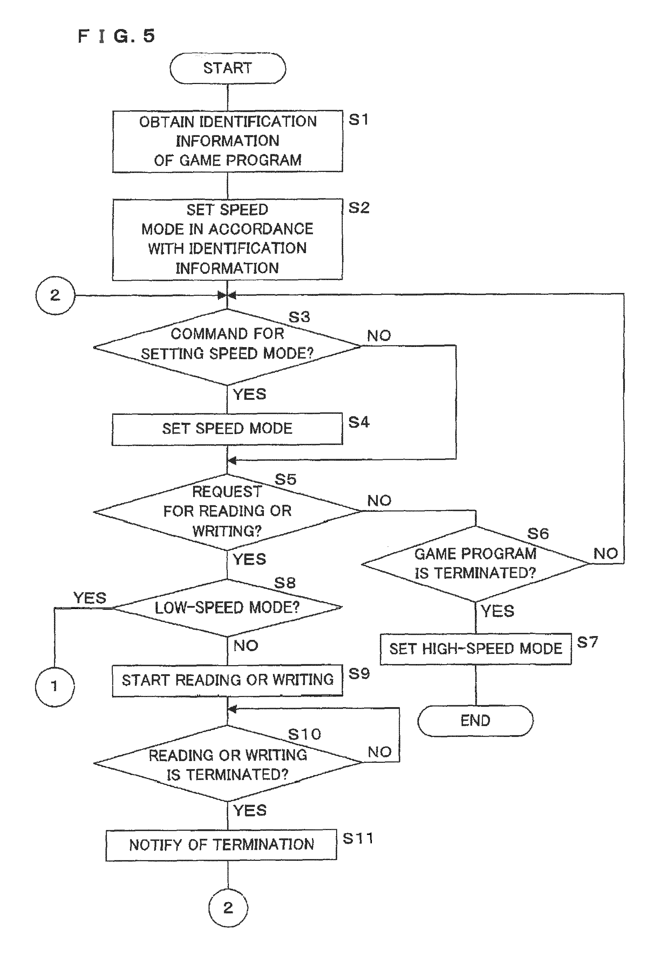

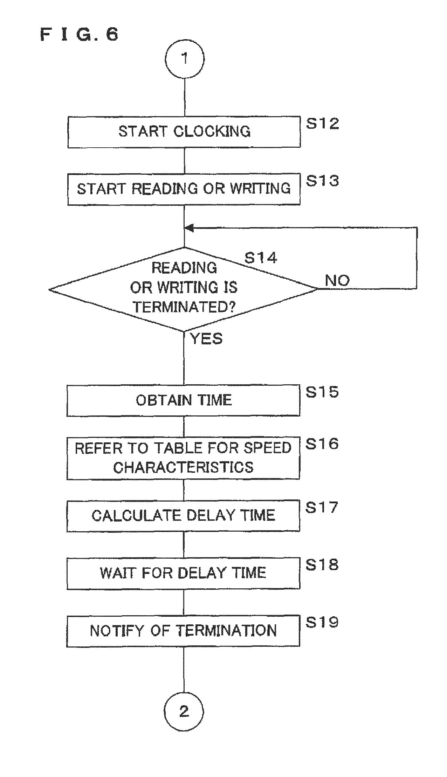

Figures 5 and 6 show an example non-limiting flowchart illustrating a procedure of speed control processing performed by the game apparatus 1. In the case where, for example, an instruction for starting a game is provided by the user on a menu screen or the like, the processor 10 of the game apparatus 1 reads out the game program 26 to be started, from the internal HDD 13, and starts executing the game program 26. Here, the speed control unit 21 of the processor 10 obtains the identification information of the game program 26 from, for example, the internal HDD 13 (step S1). The speed control unit 21 refers to a table related to the association between the game program 26 and speed stored in the internal HDD 13 based on the obtained identification information, to determine which one of the high-speed mode and the low-speed mode is used to read and write data related to the game program 26. This allows the speed control unit 21 to set a speed mode in accordance with the obtained identification information (step S2).

The speed control unit 21 determines whether or not a command for setting a speed mode related to reading and writing of data with respect to the internal HDD 13 is issued by executing the game program 26 (step S3). If the command for setting a speed mode is issued (S3: YES), the speed control unit 21 sets a speed mode in response to the command (step S4), and proceeds to step S5. If the command for setting the speed mode is not issued (S3: NO), the speed control unit 21 proceeds to step S5.

The speed control unit 21 determines whether or not a request for reading or writing of data with respect to the internal HDD 13 is made by executing the game program 26 (step S5). If the request for reading or writing data is not made (S5: NO), the speed control unit 21 determines whether or not the processing of the game program 26 is terminated (step S6). If the processing of the game program 26 is not terminated (S6: NO), the speed control unit 21 returns to step S3. If the processing of the game program 26 is terminated (S6: YES), the speed control unit 21 sets reading and writing of data in the high-speed mode (step S7), and terminates the processing.

If a request for reading or writing data is made (S5: YES), the speed control unit 21 determines whether or not the current setting for reading and writing data is in the low-speed mode (step. S8). If the current setting is not in the low-speed mode (S8: NO), i.e. if the setting is in the high-speed mode, the speed control unit 21 starts the requested processing of reading or writing data (step S9). The speed control unit 21 determines whether or not the processing of reading or writing data is terminated (step S10). If the processing of reading or writing data is not terminated (S10: NO), the speed control unit 21 waits until the processing is terminated. If the processing of reading or writing data is terminated (S10: YES), the speed control unit 21 notifies the game program 26 which made the request that reading or writing of data is terminated (step S11), and returns to step S3.

If the current setting for reading and writing of data is in the low-speed mode (S8: YES), the speed control unit 21 starts clocking by a timer or the like of the processor 10 (step S12). The speed control unit 21 starts processing of reading or writing the requested data (step S13). The speed control unit 21 determines whether or not the processing of reading or writing data is terminated (step S14). If the processing of reading or writing data is not terminated (S14: NO), the speed control unit 21 waits until the processing is terminated. The processing of reading or writing data is terminated (S14: YES), the speed control unit 21 obtains time measured by the timer to obtain the time required for processing of reading or writing data (step S15).

The game apparatus 1 stores the association between the data size and the reading or writing speed in the low-speed mode as a table for speed characteristics stored in the first memory 11, for example. The speed control unit 21 refers to the table for speed characteristics stored in the first memory (step S16), and calculates time to be consumed for reading or writing of data concerning the request. The speed control unit 21 calculates a delay time based on the difference between the processing time obtained at step S15 and the time on the basis of the table referred to at step S16 (step S17). The speed control unit 21 waits for the calculated delay time (step S18). The speed control unit 21 notifies the game program 26 which made the request that reading or writing of data is terminated after the delay time has elapsed (step S19), and returns to step S3.

### <Selection of Processing Routine>

The first basic program 24 and the second basic program 25 executed by the processor 10 of the game apparatus 1 according to the present example embodiment is configured to operate in the game apparatus 1 of the hardware configuration illustrated in Figure 1, while operating also in a game apparatus with a hardware configuration different from the above. The first basic program 24 and the second basic program 25 also operate in, for example, a game apparatus including an optical disk drive or a game apparatus not including the internal HDD 13.

Accordingly, for the first basic program 24 or the second basic program 25, multiple processing routines are provided corresponding to multiple kinds of hardware configurations. For example, as multiple processing routines, a processing routine for reading in a device driver for the internal HDD 13 and a processing routine for reading in a device driver for the optical disk drive can be provided. For example, as processing routines for reading out the game program 26, a processing routine for reading out from the internal HDD 13 and a processing routine for reading out from an optical disk drive are provided. These are mere examples and other processing routines corresponding to various hardware configurations may also be provided.

In the first memory 11 or the like of the game apparatus 1, identification information which can be used to identify the hardware configuration of the game apparatus 1 is stored. The identification information includes, for example, a model name, version information or a production number of the game apparatus 1. In the case where the processor 10 of the game apparatus 1 executes the first basic program 24 or the second basic program 25, a determination as to which processing routine is to be executed is made based on the identification information stored in the first memory 11.

By the processor 10 of the game apparatus 1 executing the first basic program 24 or the second basic program 25, the identification information obtaining unit 22 and the selection unit 23 are implemented as software-based functional blocks in the processor 10. The identification information obtaining unit 22 performs processing of obtaining the identification information stored in the first memory 11. The selection unit 23 performs processing of selecting a processing routine suitable for the game apparatus 1 from the multiple processing routines included in the first basic program 24 or the second basic program 25.

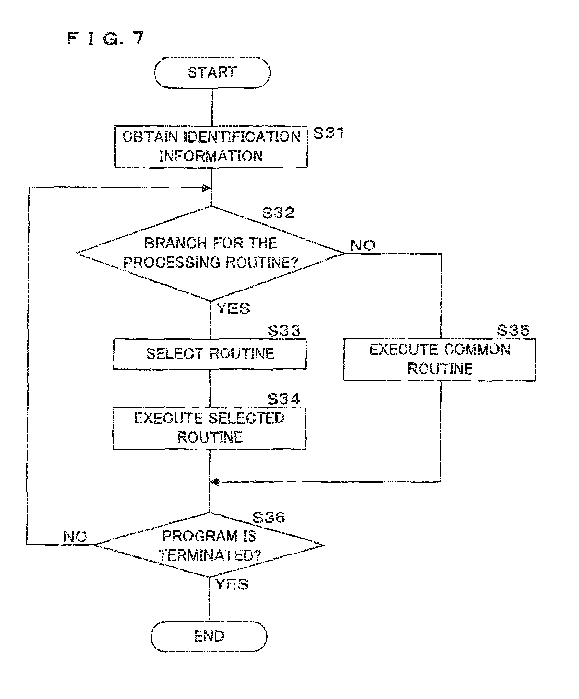

Figure 7 shows an example non-limiting flowchart illustrating a procedure of selecting a processing routine to be performed by the game apparatus 1. In the processor 10 of the game apparatus 1 which executed the first basic program 24 or the second basic program 25, the identification information obtaining unit 22 obtains identification information stored in the first memory 11 or the like (step S31). The processor 10 sequentially executes the first basic program 24 or the second basic program 25 and determines whether or not a branch for the processing routine is reached (step S32). If a branch for the processing routine is reached (S32: YES), the selection unit 23 of the processor 10 selects a routine to be executed based on the identification information obtained at step S31 (step S33). The processor 10 executes the processing routine selected by the selection unit 23 (step S34), and proceeds to step S36. If a branch for the processing routine is not reached (S32: NO), the processor 10 executes a common processing routine regardless of the hardware configuration (step S35), and proceeds to step S36. The processor 10 determines whether or not the first basic program 24 or the second basic program 25 is terminated (step S36), and if not terminated (S36: NO), returns to step S32. If the program is terminated (S36: YES), the processor 10 terminates the processing.

### <Restoration of Program>

As described above, the game apparatus 1 stores, in the second memory 12, the replicated data 28 of the second basic program 25 and the game data 27 stored in the internal HDD 13. In the present example embodiment, the game apparatus 1 imparts information such as a checksum or an error detection code to the data to be stored in the internal HDD 13, and can detect data corruption. When corruption of the second basic program 25 or the game data 27 is detected, the processor 10 of the game apparatus 1 reads out the replicated data 28 from the second memory 12 and overwrites the internal HDD 13 with the read-out data, to restore the corrupted data. It is to be noted that such data restoring processing is implemented by the first basic program 24 stored in the first memory 11.

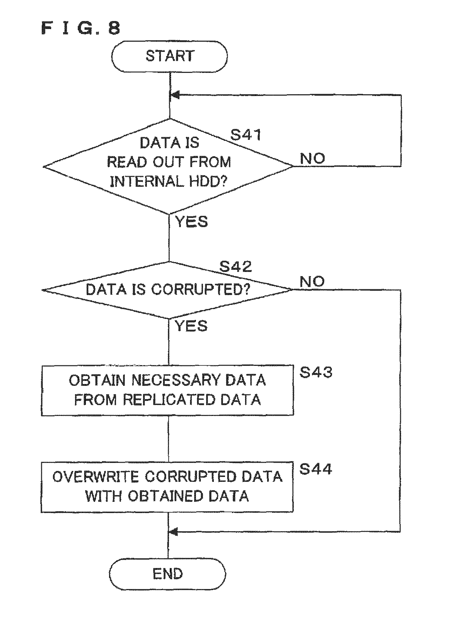

Figure 8 shows an example non-limiting flowchart showing a procedure of data restoration processing performed by the game apparatus 1. While game processing, system processing or the like is being performed, the processor 10 determines whether or not data is read out from the internal HDD 13 (step S41). If data is not read out from the internal HDD 13 (S41: NO), the processor 10 waits until data is read out.

If data is read out from the internal HDD 13 (S41: YES), the processor 10 determines whether or not the read-out data is corrupted based on an error detection code or the like attached to the data (step S42). If the data is not corrupted (S42: NO), the processor 10 terminates the processing. If the data is corrupted (S42: YES), the processor 10 obtains necessary data (i.e. corrupted data) from the replicated data 28 stored in the second memory 12 (step S43). The processor 10 restores data by overwriting the corrupted data in the internal HDD 13 with the data obtained from the replicated data 28 (step S44), and terminates the processing.

### <Conclusion>

The game apparatus 1 according to the present example embodiment with the configuration described above includes: a communication unit 15 transmitting/receiving the game program 26, data and the like to/from the server apparatus 9 or the like via the network 8; an internal HDD 13 in which the game program 26, data and the like obtained through communication are stored; and a processor 10 reading out and executing the game program 26 stored in the internal HDD 13. The game apparatus 1, however, is not provided with an optical disk drive for reading out the game program 26, data and the like from an optical disk storing them. Thus, the game apparatus 1 according to the present example embodiment can realize reduction in cost and size compared to a game apparatus provided with an optical disk drive.

The game apparatus 1 according to the present example embodiment includes a controller 3 having an operation unit 33, a display unit 34 and a wireless communication unit 32. The game apparatus 1 includes a wireless communication unit 16, and wirelessly transmits/receives operation information accepted by the operation unit 33 and information such as an image to be displayed on the display unit 34 to/from the controller 3. The game apparatus 1 includes a power supply unit 17, and supplies power to the controller 3 connected via the power supply cable 4, to charge the battery 35 of the controller 3. This can enhance the convenience of the user in terms of charging the battery 35 of the controller 3.

The game apparatus 1 according to the present example embodiment includes the first memory 11 configured of a non-volatile memory. In the first memory 11, the first basic program 24, which starts to be executed when the game apparatus 1 is started, is stored. In the internal HDD 13, the second basic program 25, which is executed after the first basic program 24 is executed, is stored. Accordingly, the game apparatus 1 can shorten the processing time required for startup. The game apparatus 1 according to the present example embodiment includes the second memory 12 configured of a non-volatile memory. In the second memory 12, replicated data 28 is stored, which is obtained by replicating the second basic program 25, game data 27 and the like stored in the internal HDD 13. This can enhance the reliability of data stored in the game apparatus 1.

The game apparatus 1 according to the present example embodiment controls the speed of reading or writing with respect to the internal HDD 13 to be switched between the high-speed mode and the low-speed mode. The speed control unit 21 of the game apparatus 1 obtains information for identifying the game program 26 to be executed by the processor 10, and switches between the high-speed mode and the low-speed mode in accordance with the obtained identification information. The speed control unit 21 switches the mode when a command for switching from the high-speed mode to the low-speed mode or vice versa is sent from the game program 26. In the low-speed mode, the speed control unit 21 emulates the characteristic of the speed of reading and writing of data with respect to the external HDD 6 in the case where the external HDD 6 is connected to the HDD connection unit 18, and reads and writes data from/to the internal HDD 13. Accordingly, when the game program 26 is stored either in the internal HDD 13 or the external HDD 6, data can be read out and written in with similar speed characteristics. The game apparatus 1 according to the present example embodiment can therefore alleviate the burden of development, debugging and the like of the game program 26.

The first basic program 24 or the second basic program 25 executed by the game apparatus 1 according to the present example embodiment includes a processing routine for the game apparatus 1 according to the present example embodiment and a processing routine for a game apparatus having a hardware configuration different from the game apparatus 1. The processor 10 which executed the first basic program 24 or the second basic program 25 obtains identification information of the game apparatus 1 by the identification information obtaining unit 22, and selects a processing routine by the selection unit 23 in accordance with the identification information. Accordingly, in the case where, for example, a manufacturing and distributing company of the game apparatus 1 or the like manufactures and sells game apparatuses having different hardware configurations, the first basic program 24 or the second basic program 25 can be shared by different types of game apparatuses, thereby facilitating development, management and the like of programs.

While wireless communication is performed between the controller 3 and the game apparatus 1 in the present example embodiment, the present technique is not limited thereto. For example, it may be so configured that wired communication is performed between the controller 3 and the game apparatus 1. For example, an operation unit may be provided in the main body of the game apparatus 1. In such a configuration, it is not necessary for the game apparatus 1 to have the power supply unit 17 for supplying power to the controller 3 via the removable power supply cable 4.

While the game apparatus 1 according to the present example embodiment is configured to store the first basic program 24 in the first memory 11 and to store the second basic program 25 in the internal HDD 13, the present technique is not limited thereto. For example, the first basic program 24 and the second basic program 25 may be stored in the first memory 11. For example, the first basic program 24 and the second basic program 25 may be stored in the internal HDD 13. In such a case, it is not necessary to divide a basic program into the first program and the second program.

While the game apparatus 1 according to the present example embodiment has such a configuration that the replicated data 28 such as the second basic program 25, the game data 27 and the like located in the internal HDD 13 is stored in the second memory 12, the present technique is not limited thereto. For example, the game apparatus 1 may have a configuration of not storing the replicated data 28 in the second memory 12. In such a case, the game apparatus 1 may be configured not to include the second memory 12.

While the game apparatus 1 according to the present example embodiment has such a configuration that the speed control unit 21 controls the speed of reading and writing data from/to the internal HDD 13, the present technique is not limited thereto. For example, the game apparatus 1 may have a configuration in that the speed is not controlled by the speed control unit 21. Though the speed control unit 21 switches the speed between two stages of the high-speed mode and the low-speed mode, the present technique is not limited thereto. The speed control unit 21 has a configuration of switching speed among more than two stages. Though the game apparatus 1 according to the present example embodiment has a configuration in which the external HDD 6 can be connected to the HDD connection unit 18, the present technique is not limited thereto. For example, the game apparatus 1 may be configured not to include the HDD connection unit 18.

While the first basic program 24 and the second basic program 25 according to the present example embodiment has a configuration including multiple processing routines for multiple game apparatuses having different hardware configurations, the present technique is not limited thereto. For example, the first basic program 24 and the second basic program 25 may be the ones dedicated for the game apparatus 1 with the hardware configuration illustrated in Figure 1.

It is to be understood that elements and the like in singular form preceded by an article "a" or "an" do not exclude more than one elements related thereto when used in the present specification.

### Description of Reference Codes

- 1: game apparatus
- 3: controller
- 4: power supply cable
- 5: display apparatus
- 6: external HDD
- 8: network
- 9: server apparatus
- 10: processor
- 11: first memory
- 12: second memory
- 13: internal HDD
- 14: image output unit
- 15: communication unit
- 16: wireless communication unit
- 17: power supply unit
- 18: HDD connection unit
- 21: speed control unit
- 22: identification information obtaining unit
- 23: selection unit
- 24: first basic program
- 25: second basic program
- 26: game program
- 27: game data
- 28: replicated data
- 31: processor
- 32: wireless communication unit
- 33: operation unit
- 34: display unit
- 35: battery
- 36: connection unit

## Claims

1. A game apparatus, comprising:
an internal hard disk drive (13) storing a program and/or data;
a processor (10) executing a program stored in the hard disk drive (13) to perform game processing;
a speed control unit (21) controlling a speed of reading or writing of data with respect to the hard disk drive (13),
wherein
the speed control unit (21) switches a mode for reading and/or writing of data with respect to the hard disk drive (13) to either one of two modes with different speeds, and
at least one of the two modes is a mode for emulating a speed of reading and/or writing of data with respect to a storage device other than the hard disk drive (13).

2. The game apparatus according to claim 1, comprising a connection unit (18) to which an external hard disk drive (6) is detachably connected, wherein
the speed control unit (21) emulates a speed of reading and/or writing of data with respect to the external hard disk drive (6) in the mode for emulating.

3. The game apparatus according to claim 1 or 2, wherein
the processor (10) is able to execute in parallel a plurality of programs including a program concerning a game and/or a program other than a program concerning a game, and
the speed control unit (21) switches the mode for reading and/or writing of data, for each program being executed by the processor (10).

4. The game apparatus according to any one of claims 1 to 3, comprising an obtaining unit (21) obtaining identification information of a program to be executed by the processor (10), wherein
the speed control unit (21) controls a speed of reading and/or writing of data in accordance with the identification information obtained by the obtaining unit (21).

5. The game apparatus according to any one of claims 1 to 3, wherein the speed control unit (21) controls a speed of reading and/or writing of data in response to a command from a program being executed by the processor (10).

6. The game apparatus according to any one of claims 1 to 5, wherein
the processor (10) is able to execute a program which operates by using a different hard disk drive different from the internal hard disk drive (13), and
the speed control unit (21) emulates a speed of reading and/or writing of data with respect to the different hard disk drive in a case where the processor (10) executes the program.

7. The game apparatus according to any one of claims 1 to 6, comprising a communication unit (15) transmitting/receiving a program and/or data via a network, and not comprising an optical disk drive.

8. The game apparatus according to claim 7, comprising a first storage (11) configured of a non-volatile memory,
wherein
the first storage (11) stores a first program (24) starting to be executed when the game apparatus (1) is started, and
the hard disk drive (13) stores the second program (25) starting to be executed after the first program (24) starts to be executed.

9. The game apparatus according to claim 8, comprising a second storage (12) configured of a non-volatile memory,
wherein the second storage (12) stores the second program (25).

10. The game apparatus according to claim 9, comprising:
a corruption determination unit (10) determining presence/absence of corruption in the second program (25) stored in the hard disk drive (13); and
a program restoration unit (10) causing the hard disk drive (13) to store the second program (25) stored in the second storage (12) if the corruption determination unit (10) determines that corruption is present.

11. The game apparatus according to any one of claims 8 to 10, wherein a program and/or data concerning a game received by the communication unit (15) is stored in the hard disk drive (13), and is not stored in the first storage (11).

12. The game apparatus according to any one of claims 7 to 11, comprising a connection unit (18) to which an external hard disk drive (6) is detachably connected,
wherein a program and/or data concerning a game received by the communication unit (15) is stored in the internal hard disk drive (13) or the external hard disk drive (6) connected to the connection unit (18).

13. The game apparatus according to any one of claims 1 to 12, wherein
the game apparatus is compatible with another game apparatus comprising an optical disk drive for reading out a program and/or data from an optical disk and a processor for executing the program read out from the optical disk to perform game processing, and
an interface for the hard disk drive (13) is same as an interface for the optical disk drive in said another game apparatus.

14. The game apparatus according to any one of claims 1 to 13, comprising:
a wireless communication unit (16) performing wireless communication with a wireless operation device (3) having an operation unit (33) and a battery (35) and wirelessly transmitting/receiving information concerning an operation accepted by the operation unit (33); and
a power supply unit (17) to which the wireless operation device (3) is detachably connected via a power supply line (4), and supplying power to the battery (35) of the wireless operation device (3) via the power supply line (4).

15. The game apparatus according to any one of claims 1 to 13, comprising a wireless communication unit (16) performing wireless communication with a wireless operation device (3) wirelessly transmitting/receiving information concerning an operation accepted by an operation unit (33),
wherein the wireless communication unit (16) performs wireless communication with a dedicated communication protocol.

16. The game apparatus according to any one of claims 1 to 13, comprising a wireless communication unit (16) performing wireless communication with a wireless operation device (3) having an operation unit (33) and a display unit (34) and wirelessly transmitting/receiving information concerning an operation accepted by the operation unit (33) and information concerning an image to be displayed on the display unit (34).

17. A computer program executed by the processor (10) of the game apparatus (1) according to any one of claims 1 to 16, comprising a processing routine for the game apparatus and one or more processing routines for game apparatuses having hardware configurations different from the game apparatus,
wherein the computer program causes the processor (10) to operate as
an identification information obtaining means (22) for obtaining identification information of the game apparatus (1), and
a selection means (23) for selecting a processing routine in accordance with the identification information obtained by the identification information obtaining means (22).

18. A computer program, causing a processor (10) of a game apparatus (1) comprising an internal hard disk drive (13) storing a program and/or data to operate as a speed control means (21) for switching a mode for reading and/or writing of data with respect to the hard disk drive (13) to either one of two modes with different speeds in response to a command from a program being executed.

19. A speed control method controlling, in a game apparatus (1) comprising an internal hard disk drive (13) storing a program and/or data, a speed of reading and/or writing of data with respect to the hard disk drive (13), comprising:
obtaining identification information of a program to be executed; and
switching a mode for reading and/or writing of data with respect to the hard disk drive (13) to either one of two modes with different speeds in accordance with the obtained identification information.
